# EUROPÄISCHE PATENTSCHRIFT

(11) **EP 2 496 642 B1**
(45) Veröffentlichungstag und Bekanntmachung des Hinweises auf die Patenterteilung: **29.10.2014**
(21) Anmeldenummer: 10774216.5
(22) Anmeldetag: 05.11.2010
(51) Int. Cl.: C08G 59/68, C08G 59/50, C08G 59/40

(54) **VERWENDUNG VON GUANIDIN-DERIVATEN ALS HÄRTUNGSBESCHLEUNIGER FÜR EPOXIDHARZE**
USE OF GUANIDINE DERIVATIVES AS CURING ACCELERATORS FOR EPOXY RESINS
UTILISATION DE DÉRIVÉS DE GUANIDINE COMME ACCÉLÉRATEURS DE DURCISSEMENT DE RÉSINE ÉPOXY

(30) Priorität: 05.11.2009 DE 102009052061
(43) Veröffentlichungstag der Anmeldung: 12.09.2012
(73) Patentinhaber: AlzChem AG, 83308 Trostberg (DE)
(72) Erfinder: HITZLER, Martin, 78244 Gottmadingen (DE); KRIMMER, Hans-Peter, 84558 Kirchweidach (DE); STROBEL, Sylvia, 84518 Garching (DE); BRANDL, Monika, 83342 Tacherting (DE)
(74) Vertreter: Böhm, Brigitte
(86) Internationale Anmeldenummer: PCT/EP2010/066951
(87) Internationale Veröffentlichungsnummer: WO 2011/054945

(56) Entgegenhaltungen:
- WO-A1-92/01726
- WO-A1-94/14866
- DE-A1-102006 056 311
- US-A- 3 397 156
- US-A- 3 575 926
- US-A- 3 660 316

## Beschreibung

Die vorliegende Erfindung betrifft Guanidin-Derivate, deren Verwendung als Härtungsbeschleuniger in kalthärtenden Epoxidharzen sowie Verfahren zur Herstellung von kalthärtenden Epoxidharzen.

Die Verwendung von duroplastischen Epoxidharzen ist aufgrund ihrer guten Chemikalienbeständigkeit, ihrer sehr guten thermischen und dynamischmechanischen Eigenschaften sowie ihr hohes elektrisches Isolationsvermögen weit verbreitet. Sie zeigen überdies eine gute Haftung auf vielen Substraten. Aufgrund dieser Eigenschaften dienen sie bevorzugt als Matrix mit geringer Schwindung für Faserverbundwerkstoffe (Composites), die als strukturelle Elemente bei gleichzeitig geringem Gewicht eingesetzt werden. Darüber hinaus findet man Epoxidharze vielfach als Bestandteil von Gießharzen, Elektrolaminaten, Strukturklebstoffen, Pulverlacken und Vergussmassen (vgl. G. W. Ehrenstein, Faserverbund-Kunststoffe, 2006, 2. Auflage, Carl Hanser Verlag, München, Seite 63 - 68; und M. Reyne, Composite Solutions, 2006, JEC Publications, Seite 31 - 37).

Die Härtung von Epoxidharzen verläuft nach unterschiedlichen Mechanismen. Neben der Härtung mit Phenolen oder Anhydriden wird häufig die Härtung mit Aminen durchgeführt. Zu diesem Zweck wird die stöchiometrische Menge an Wasserstoffatomen, wie sie beispielsweise bifunktionelle Amine liefern, zugesetzt. In diesem Zusammenhang sei auf das Kapitel 2 "Curing Agents for Epoxy resins" in "Chemistry and Technology of Epoxy Resins" von Bryan Ellis, erschienen 1993 im Verlag Blackie Academic & Professional, verwiesen. Hierin wird beschrieben, dass die Vernetzung vielfach mittels aromatischer, aliphatischer, araliphatischer oder cycloaliphatischer Amine, Polyamide, Polyamidoamine, Polyetheramine oder Mannichbasen durchgeführt wird. Aufgrund der hohen Reaktivität und damit niedrigen Latenz, werden derartige Epoxidharz-Härter-Zusammensetzungen zumeist zweikomponentig ausgeführt. Dies bedeutet, dass Harz (A-Komponente) und Härter (B-Komponente) getrennt aufbewahrt werden und erst kurz vor Gebrauch im korrekten Verhältnis gemischt werden. Hierbei bedeutet "latent", dass eine Mischung der Einzelkomponenten unter definierten Lagerbedingungen und Lagerzeiten stabil vorliegt und erst nach einer meist thermischen Aktivierung schnell aushärtet (H. Sanftenberg, M. Fedke Angew. Makrom. Chem. 1995, 225, 99-107). Zur Vervollständigung der Vernetzung und zum Erreichen der gewünschten Endeigenschaften des duromeren Werkstoffs werden auch solche kalthärtenden Epoxidharz-Zusammensetzungen oft einer thermischen Nachbehandlung unterzogen. Ein typischer Temperaturbereich zur thermischen Nachbehandlung liegt zwischen 60 und 80°C.

Einkomponentige, heißhärtende Mischungen sind hingegen gebrauchsfähig fertig vorkonfektioniert, wobei Mischungsfehler der Einzelkomponenten bei Gebrauch vor Ort ausgeschlossen sind. Voraussetzung dafür bilden latente Härtersysteme, welche bei Raumtemperatur stabil (lagerfähig) sind, jedoch unter Erwärmung bereitwillig ausreagieren. Für solche einkomponentigen Epoxidharz-Formulierungen ist bspw. Dicyandiamid (Dicy) ein besonders geeigneter und auch kostengünstiger Härter. Unter Umgebungsbedingungen können entsprechende Harz-Härter-Mischungen bis zu sechs (6) Monaten gebrauchsfähig gelagert werden. Begründet wird diese Eigenschaft vor allem durch die Unlöslichkeit von Dicy in Epoxidharzen bei Umgebungstemperatur (Bryan Ellis, Chemistry and Technology of Epoxy Resins, 1993, Verlag Blackie Academic & Professional, Seite 49). Allerdings benötigen derartige Systeme aufgrund der ausgeprägten Reaktionsträgheit von Dicy lange Härtungszeiten bei hohen Temperaturen (R. Lopez, 1966, US 3,391,113; G. Ott, 1949, US 2,637,715 B1; J. v. Seyerl, 1984, EP 0 148 365). Zur Herabsetzung der Härtungstemperaturen können in Kombination mit dem Dicyandiamid-Härter Beschleuniger eingesetzt werden. Verbindungen, welche diese Eigenschaften aufweisen, sind u. a. Urone (Th. Güthner, B. Hammer J. Appl. Polym. Sci., 1993, 50, 1453 - 1459; Brockmann et al. J. Adhesion & Adhesives, 2000, 20, 333 - 340 ; Poisson et al. J. Appl. Polym. Sci., 1998, 69, 2487 - 2497) oder Imidazole (GB 1 050 679). Während für Uron-Systeme außergewöhnlich lange Latenzzeiten beschrieben werden, besitzen Imidazol-Formulierungen mit oder ohne Dicyandiamid im Allgemeinen eine geringe Topfzeit von lediglich einigen Stunden (Bryan Ellis, Chemistry and Technology of Epoxy Resins, 1993, Verlag Blackie Academic & Professional, Seite 58 - 60).

In der deutschen Offenlegungsschrift DE 19 51 600 werden bei Zimmertemperatur oder darunter schnellhärtende Klebemittel beschrieben, die aus einer Kombination von Epoxidharz, einem Ethylenpolyamin wie beispielsweise Diethylentriamin (DETA), N-(Aminoethyl)-piperazin, Dicyandiamid (Dicy) und einer Imidazolverbindung besteht. Detailliert wird offenbart, dass sowohl ein Imidazol als auch Dicy für die erfindungsgemäße Ausführung zwingend benötigt werden.

In der deutschen Patentschrift DE 21 31 929 wird die Verwendung einer Kombination aus Aminen und Dicy zur Herstellung von heißhärtbaren, eingedickten Epoxidharzmassen beschrieben. Die gestellte Aufgabe, weiche, möglichst nicht klebrige, aber lagerstabile Epoxidharzmassen bereitstellen zu können, die in der Hitze schnell aushärten, wird gelöst durch Voreindicken der Massen mittels reaktiver Aminhärter. Das in der voreingedickten Masse noch enthaltene, nicht reagierte Dicy kann die Vernetzung durch Hitzeeinwirkung sodann vervollständigen.

Des Weiteren werden mit der deutschen Patentanmeldung DE 10 2006 056 311 A1 heißhärtende Epoxidharz-Formulierungen beschrieben, die eine sehr gute Lagerstabilität (Latenz) aufweist. In diesen Formulierungen werden neben Dicyandiamid als Härter ausgewählte Guanidin-Derivate als Beschleuniger eingesetzt. Die aufgezeigten Epoxidharz-Formulierungen sind als Einkomponenten-Systeme ausgeführt.

Darüber hinaus werden mit der europäischen Patentanmeldung EP 310 545 A2 und der internationalen Patentanmeldung WO 92/01726 A1 verschiedene Cyanoguanidine als Härter beschrieben. Diese Härter weisen eine gute Latenz auf und sind somit für heißhärtende Epoxid-Formulierungen, die eine gute Lagerstabilität aufweisen sollen gut geeignet.

US 3 660 316 offenbart Epoxid-Zusammensetzungen, umfassend Bis-Harnstoff als Härter und 1-Cyano-3-(niederalkyl)-guanidin als Härtebeschleuniger. Diese Zusammensetzungen weisen eine gute Lagerstabilität auf.

US 3 397 156 beschreibt Epoxid-Zusammensetzungen, die Dicyandiamidhärter und Acylguanidin-Härtungsbeschleuniger umfassen. Diese Epoxid-Zusammensetzungen können bei erhöhten Temperaturen schnell in duroplastische Harze gehärtet werden.

WO 92/01726 offenbart substituierte Cyanoguanidine als Härter für Epoxidharze. Diese substituierten Cyanoguanidine sind in verschiedenen Lösungsmitteln löslich und benötigen keine unerwünschten Lösungsmittel.

WO 94/14866 beschreibt lösungsmittelfreie Epoxidharz-Zusammensetzungen, die mono-substituierte Dicyandiamide als Härter enthalten. Mithilfe dieser mono-substituierten Dicyandiamide kann die Verwendung von Lösungsmitteln vermieden werden.

US 3 575 926 beschreibt ein Verfahren zum Härten von Polyepoxiden bei Raumtemperatur umfassend Mischen und Reagieren eines Polyepoxids mit einem aliphatischen Polyamin in Gegenwart eines N-(Aminoalkyl)piperazins, Dicyandiamid und einem Imidazol.

Der vorliegenden Erfindung liegt daher die Aufgabe zugrunde, geeignete Beschleuniger für kalthärtende Epoxidharzsysteme mit hoher Reaktivität und damit niedriger Latenz bereitzustellen. Hierbei sollen solche Beschleuniger bereitgestellt werden, die einen hohen Nutzen-Kosten-Vorteil aufweisen wobei diese Stoffe gleichzeitig gut dosierbar sein sollen. Des Weiteren soll ein Verfahren zur Herstellung von kalthärtenden Epoxidharzen unter Einsatz dieser Beschleuniger bereitgestellt werden.

Diese Aufgaben wurden erfindungsgemäß durch den Einsatz von Guanidin-Derivaten gemäß Anspruch 1 gelöst.

Es hat sich hierbei überraschend gezeigt, dass die ansonsten als Härter mit einer hohen Latenz bekannten und bei Raumtemperatur in Epoxidmassen über lange Zeit stabilen Guanidin-Derivate gemäß Formel (I) als Beschleuniger von kalthärtenden, insbesondere kalthärtenden, Aminhärter umfassende Epoxidharzsystemen eingesetzt werden können. Diese Guanidin-Derivate beschleunigen eine Härtung von Epoxidmassen, insbesondere kalthärtende, Aminhärter umfassende Epoxidmassen derart, dass die Härtungszeiten bei Einsatz ein und desselben Aminhärters bis auf die Hälfte der Zeit verkürzt werden kann. Darüber hinaus sind die aufgeführten Guanidin-Derivate gemäß Formel (I) Feststoffe, so dass hierdurch eine besonders einfache und handhabungssichere Dosierung erfolgen kann.

Im Umfang der vorliegenden Erfindung sollen hierbei unter kalthärtenden Epoxidharz-Zusammensetzungen solche Zusammensetzungen verstanden sein, die eine Gelzeit bei Raumtemperatur von höchstens 48 Stunden aufweisen.

Mit dem Wissen, dass Amine im Allgemeinen bereitwillig bereits bei Raumtemperatur eine Härtung initiieren, jedoch die sehr latenten Guanidin-Derivate erst durch hohe Temperaturen aktiviert werden können, war es umso überraschender, dass genau die sehr reaktionsträgen Guanidin-Derivate gemäß Formel (I) eine bereits bei Raumtemperatur bereitwillig startende Aminhärtung zusätzlich beschleunigt. Entsprechend der vorliegenden Erfindung werden als Härtungsbeschleuniger für kalthärtende Epoxidharz-Zusammensetzungen Guanidin-Derivate der allgemeinen Formel (I) bereitgestellt, 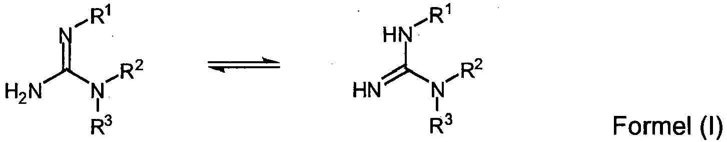 wobei gilt:
R¹ = -CN, -NO₂, -(C=O)-R⁴,
R² = -H, -Alkyl, -Benzyl, -Phenyl, -Aryl, -(C=O)-R⁴,
R³ = -H, -Alkyl,
R⁴ = -H, -Alkyl, -NH₂, -NH-Alkyl, -O-Alkyl,
und wobei für R¹ = -CN nicht gleichzeitig R² = R³= -H gilt.

Hierbei sind solche Derivate gemäß Formel (I) besonders bevorzugt, für die R² = -Alkyl oder R³ = -Alkyl gleichzeitig oder unabhängig voneinander für die Reste Methyl, Ethyl, n-Propyl, Isopropyl oder n-Butyl stehen.

Ganz besonders überraschend hat sich hierbei gezeigt dass solche Guanidin-Derivate gemäß Formel (I) als Härtungsbeschleuniger für kalthärtende Epoxidharz-Zusammensetzungen eingesetzt werden können, für die gilt:
R¹ = -NO₂
R² = -H, -Alkyl, -Benzyl, -Phenyl, -Aryl,
R³ = -H, -Alkyl.

Diese Nitroguanidin-Derivate zeichnen sich durch eine besonders hohe Beschleunigung der Aushärtezeit aus (vgl. beispiele Tabelle 1).

Hervorzuheben ist hierbei, dass die Reste R² = -Benzyl, -Phenyl oder -Aryl gemäß der vorliegenden Erfindung auch substituierte Derivate von Benzyl, Phenyl oder Aryl einschließen. Insbesondere bedeutet R² = -Chlorbenzyl, -Chlorphenyl oder -Chloraryl.

Beispielhaft und nicht limitierend für die erfindungsgemäßen Guanidin-Derivate der allgemeinen Formel (I) werden als bevorzugte Vertreter 1,1-Dimethyl-3-cyanguanidin, 1-Acetyl-3-cyanguanidin, 1-(p-Chlorphenyl)-3-cyanguanidin, Nitroguanidin, 1-Methyl-3-nitroguanidin, 1-Ethyl-3-nitroguanidin, 1-Butyl-3-nitroguanidin, 1-Benzyl-3-nitroguanidin, Formylguanidin, Acetylguanidin, Carbamoylguanidin, oder Methoxycarbonylguanidin eingesetzt.

Gemäß einem weiteren Aspekt ist somit auch die Verwendung von Guanidin-Derivaten gemäß Formel (I) als auch die Verwendung der genannten und bevorzugten Guanidin-Derivate als Härtungsbeschleuniger in kalthärtenden Epoxidharz-Zusammensetzungen Gegenstand der vorliegenden Erfindung.

Hierbei hat sich als besonders vorteilhaft herausgestellt, wenn diese Guanidin-Derivate zusammen mit mindestens einem Aminhärter für Epoxidharze, der bei einer Temperatur von < 60 °C aktivierbar ist, verwendet werden.

Dabei hat sich besonders überraschend herausgestellt, dass diese Guanidin-Derivate, obwohl sie eine hohe Latenz in Epoxidharzen aufweisen, die Härtung von kalthärtenden Epoxidharz-Zusammensetzungen in besonderem Maße beschleunigen. Insbesondere wird die Härtung solcher Epoxidharz-Zusammensetzungen beschleunigt, die einen Aminhärter umfassen.

Dabei kann insbesondere vorgesehen sein, dass erfindungsgemäße Guanidin-Derivate zusammen mit Aminhärtern aus der Gruppe Alkyldiamine, Aryldiamine, Alkylpolyamine, Arylpolyamine, Polyetheramine, wobei jeder Aminhärter mindestens zwei freie Amingruppen aufweist, verwendet werden.

Ganz besonders bevorzugt sind hierbei Aminhärter aus der Gruppe Ethylendiamin, Diethylentriamin, Triethylentetramin, meta-Xylylendiamin, Methylendianilin, para-Aminocyclohexylmethan, Isophorondiamin und Polyetheramine.

Hinsichtlich der einzusetzenden Mengen hat sich gezeigt, dass die erfindungsgemäßen Guanidin-Derivate in einer Menge von 0,01 bis 15 Gew.-% bezogen auf die Epoxid-Zusammensetzung eingesetzt und verwendet werden können. Darüber hinaus können die Guanidin-Derivate auch in einem Verhältnis von 0,01 bis 15 Teile bezogen auf 100 Teile Epoxidharz eingesetzt und verwendet werden.

Im Hinblick auf die zu härtenden Epoxidharze unterliegt die vorliegende Erfindung keinerlei Beschränkung. Es kommen sämtliche handelsüblichen Produkte in Frage, die üblicherweise mehr als eine 1,2-Epoxidgruppe (Oxiran) aufweisen und dabei gesättigt oder ungesättigt, aliphatisch, cycloaliphatisch, aromatisch oder heterozyklisch sein können. Außerdem können die Epoxidharze Substituenten wie Halogene, Phosphor- und Hydroxyl-Gruppen aufweisen. Epoxidharze auf Basis Glycidylpolyether von 2,2-Bis(4-hydroxyphenyl)-propan (Bisphenol A) sowie das mit Brom substituierte Derivat (Tetrabrombisphenol A), Glycidylpolyether von 2,2-Bis(4-hydroxyphenyl)methan (Bisphenol F) und Glycidylpolyether von Novolacken sowie auf Basis von Anilin oder substituierten Anilinen wie bspw. p-Aminophenol oder 4,4'-Diaminodiphenylmethane können durch Anwendung der erfindungsgemäßen Verbindungen der Formel (I) in Gegenwart von Aminen besonders gut gehärtet werden.

Exemplarisch für die erfindungsgemäß eingesetzten Aminhärter werden als bevorzugte Vertreter Ethylendiamin (EDA), Diethylentriamin (DETA), Triethylentertamin (TETA), meta-Xylylendiamin (MXDA), Methylendianilin (MDA), para-Aminocyclohexylmethan (PACM), Isophorondiamin (IPDA) und Polyetheramine (Jeffamine) genannt.

Die Zubereitung der Epoxidharzmassen im Sinne der Erfindung erfolgt nach den bekannten fachmännischen Grundlagen. Hierzu werden in einem ersten Schritt Harz und Aminhärter homogen vermischt. Dabei stellt der Aminhärter bevorzugt die vernetzende Komponente dar und wird somit in der benötigten, stöchiometrischen Menge eingesetzt. Die Einsatzmenge hängt meist direkt vom Molekulargewicht der gewählten Amin-Verbindung ab und damit auch vom jeweils spezifischen HEW-Wert (Hydrogen Equivalent Weight). Dieses kann entweder dem Datenblatt des Herstellers entnommen werden oder lässt sich als Quotient darstellen, wobei das Molekulargewicht des Amins durch die Anzahl der reaktiven NH-Funktionen geteilt wird. Ergänzend lässt sich der HEW-Wert auch bspw. über die Bestimmung der maximalen Glasübergangstemperatur (Tg-Max-Methode) genauer ermitteln. Zur stöchiometrischen Härtung von 100 Teilen Epoxidharz wird der Quotient aus dem HEW (Amin) und dem EEW (Harz) gebildet und mit 100 multipliziert. Den EEW-Wert (Epoxy Equivalent Weight) des Harzes erhält man aus dem Datenblatt des Herstellers.

Im zweiten Schritt erfolgt die Zugabe der erfindungsgemäßen Guanidin-Derivate gemäß Formel (I) als Beschleuniger, wobei die Abfolge der Mischungszubereitung aus Harz, Härter, Beschleuniger und evtl. weiteren Additiven für die Wirkung der Erfindung nicht bindend ist.

Daher ist gemäß einem weiteren Aspekt auch ein Verfahren zur Herstellung einer kalthärtenden Epoxidharz-Zusammensetzung Gegenstand der vorliegenden Erfindung. In diesem Verfahren erfolgt die Herstellung der Epoxidharz-Zusammensetzung mittels homogener Durchmischung der bereitgestellten oder Hinzugefügten Bestandteile, wobei das Verfahren folgende Verfahrensschritte umfasst
a. Bereitstellen von mindestens einem Epoxidharz mit durchschnittlich mehr als einer Epoxidgruppe pro Molekül,
b. Hinzufügen von mindestens einem Aminhärter für Epoxidharze, der bei einer Temperatur von < 60 °C aktivierbar ist,
c. Hinzufügen von mindestens einem Guanidin-Derivat gemäß Formel (I) als Härtungsbeschleuniger 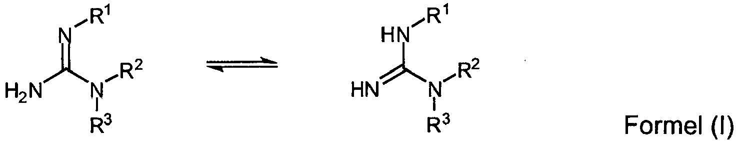 wobei gilt:
   R¹ = -CN, -NO₂, -(C=O)-R⁴,
   R² = -H, -Alkyl, -Benzyl, -Phenyl, -Aryl, -(C=O) R⁴,
   R³ = -H, -Alkyl,
   R⁴ = -H, -Alkyl, -NH₂, -NH-Alkyl, -O-Alkyl,
   und wobei für R¹ = -CN nicht gleichzeitig R² = R³= -H gilt,
mit der Maßgabe, dass die Verfahrensschritte b) und c) nacheinander oder gleichzeitig erfolgen.

Hierbei hat sich insoweit in überraschender Weise gezeigt, dass das gleichzeitige oder nacheinander Hinzufügen der Komponenten Aminhärter und Guanidin-Derivat gemäß angegebener Struktur zu einem Verfahren führt, dessen Resultat eine besonders schnell kalthärtende Epoxidharz-Zusammensetzung ist. Dies ist umso mehr überraschend als dass die eingesetzten Guanidin-Derivate gemäß der vorliegenden Erfindung bislang nur als latente Härter für kalthärtende Epoxidharze bekannt waren. Somit kann mit dem vorliegenden Verfahren unter Einsatz von erfindungsgemäßen Guanidin-Derivaten ein Verfahren zur Herstellung kalthärtenden Epoxidharz-Zusammensetzungen mit besonders kurzen Abbindzeiten bereitgestellt werden.

Gemäß einer weiterhin bevorzugten Ausführung des Verfahrens erfolgt zuerst die Zugabe des Aminhärters und hiernach die Zugabe des Härtungsbeschleunigers. Hierdurch kann eine besonders gleichmäßige und damit besonders homogene Durchmischung erreicht werden.

Weiterhin bevorzugt sind Verfahren, die ohne zusätzlichen Wärmeeintrag erfolgen.

Des weiteren kann gemäß der vorliegenden Erfindung vorgesehen sein, dass vor den Verfahrensschritten b) oder c) die Zugabe von mindestens einem Hilfs-und/ oder Zusatzstoff erfolgt, wobei der Hilfs- und/ oder Zusatzstoff vorzugsweise ausgewählt ist aus der Gruppe Reaktivverdünner, Füllstoffe, Rheologieadditive, Thixotropierungsmittel, Dispergieradditive, Antibackmitel, Farbstoffe, Pigmente, Zähmodifikatoren und/oder Brandschutzadditive.

Dabei hat sich insbesondere gezeigt, dass Verfahren, in denen im Verfahrensschritt c) 1,1-Dimethyl-3-cyanguanidin, 1-Acetyl-3-cyanguanidin, 1-(p-Chlorphenyl)-3-cyanguanidin, Nitroguanidin, 1-Methyl-3-nitroguanidin, 1-Ethyl-3-nitroguanidin, 1-Butyl-3-nitroguanidin, 1-Benzyl-3-nitroguanidin, Formylguanidin, Acetylguanidin, Carbamoylguanidin oder Methoxycarbonylguanidin als Härtungsbeschleuniger eingesetzt werden, zu besonders schnell härtenden Epoxidharzen führt.

Als besonders bevorzugte Verfahren sind gemäß der vorliegenden Erfindung auch solche Verfahren hervorzuheben, in denen als Härtungsbeschleuniger die oben beschriebenen und bevorzugten Guanidin-Derivate Verwendung finden.

Hinsichtlich der Aminhärter können gemäß der vorliegenden Erfindung insbesondere solche Aminhärter eingesetzt werden, die bei einer Temperatur von > 10 °C und < 60 °C, insbesondere > 10 °C und < 40 °C aktivierbar sind. Dabei hat sich herausgestellt, dass als Aminhärter insbesondere solche Härter eingesetzt werden können, die ausgewählt werden aus der Gruppe Alkyldiamin, Aryldiamin, Alkylpolyamin, Arylpolyamin, Polyetheramin, wobei diese Aminhärter jeweils mindestens zwei freie Amingruppen aufweisen. Als freie Amingruppe werden im Rahmen der vorliegenden Erfindung solche Amingruppen bezeichnet, die zwei Wasserstoffatome (-NH₂) aufweisen. Ganz besonders bevorzugt sind solche Verfahren, in denen der Aminhärter gewählt wird aus der Gruppe Ethylendiamin, Diethylentriamin, Triethylentertamin, meta-Xylylendiamin, Methylendianilin, para-Aminocyclohexylmethan, Isophorondiamin und/oder Polyetheramine.

Ebenso wenig sind die verwendeten Hilfsmittel für die Ausführung der Erfindung limitierend. Bevorzugte Wege zur homogenen Abmischung der Komponenten stellen beispielsweise Dissolver oder Kneter dar.

Die Einsatzmenge der erfindungsgemäßen Härtungsbeschleuniger gemäß Formel (I) unterliegt keinen Beschränkungen. Bevorzugt werden auf 100 Teile Harz 0,01 bis 15 Teile eingesetzt, vorzugsweise 0,1 bis 15 Teile, vorzugsweise 0,1 bis 10 Teile, vorzugsweise 0,1 bis 5 Teile und besonders bevorzugt 0,5 bis 1 Teile. Auch eine Kombination mehrerer Härtungsbeschleuniger gemäß Formel (I) wird durch diese Erfindung mit abgedeckt.

Die Härtung der Epoxidharze mit Hilfe der erfindungsgemäß eingesetzten Verbindungen (I) erfolgt in der Regel bei Temperaturen von 10 bis 80°C. Die Wahl der Härtungstemperatur ist abhängig von der spezifischen Verarbeitungs-und Produktanforderung und kann über die Formulierung vor allem durch Regulierung der Härtermengen sowie durch Zugabe von Additiven variiert werden. Hierbei ist insbesondere darauf hinzuweisen, dass die beschriebenen kalthärtenden Systeme auch ohne weiteren Wärmeeintrag erfolgen können. Die Reaktionen laufen hierbei spontan ab. Es kann jedoch im Rahmen der vorliegenden Erfindung zur Vervollständigung der Reaktionen ein zusätzlicher Wärmeeintrag vorgenommen werden. Hierbei ist es unerheblich, auf welche Art den Harzformulierungen Energie zugeführt wird. Beispielhaft kann dies in Form von Wärme durch einen Ofen oder Heizelemente, aber ebenso mittels Infrarotstrahlern oder Anregung durch Mirkowellen oder sonstiger Strahlen geschehen.

Ohne an die Theorie gebunden zu sein kann die beschleunigende Wirkungsweise der erfindungsgemäß substituierten Guanidin-Derivate (I) auf die Aminhärtung von Epoxidharzen anhand der Formel (I) verdeutlicht werden. 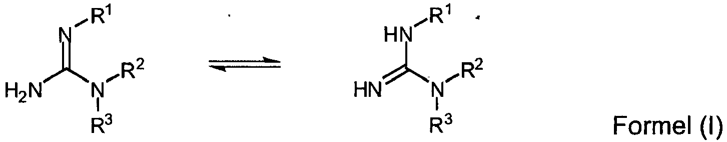 mit
R¹ = -CN, -NO₂, -(C=O)-R⁴,
R² = -H, -Alkyl, -Benzyl, -Phenyl, -Aryl, -(C=O)- R⁴,
R³ = -H, -Alkyl,
R⁴ = -H, -Alkyl, -NH₂, -NH-Alkyl, -O-Alkyl,
wobei für R¹ = -CN nicht gleichzeitig R² = R³= -H gilt.

Als organische Basen haben Amine einen ausgeprägt nukleophilen Charakter. Im Gegensatz dazu weisen Guanidine ein elektrophiles Kohlenstoffatom auf. Durch Angriff eines Aminhärters auf das Guanidin-Kohlenstoffatom erfolgt unter Eliminierung entweder von Ammoniak oder einem niedermolekularen Amin die Bildung der entsprechenden, mit dem angreifenden Aminhärter substituierten Guanidin-Verbindung. Als wesentliche Lehre dieser Erfindung ist somit die Erkenntnis zu ziehen, dass durch eine Substitutionsreaktion eines höher molekularen Amins aus Guanidinen der Zusammensetzung (I) niedermolekulare Amine oder Ammoniak freigesetzt werden können. Ammoniak und niedermolekulare Amine wie z.B. Dimethylamin zeigen eine höhere Reaktivität gegen über Epoxidgruppen als die beschriebenen, üblicherweise kommerziell eingesetzten Aminhärter. Guanidine (I) tragen in ihrer Struktur also blockierte, niedermolekulare Amine, die durch Einwirkung von anderen Aminen in einer Gleichgewichtsreaktion freigesetzt werden können. Diese wiederum können die Epoxidharzhärtung aufgrund der höheren Reaktivität katalysieren und damit beschleunigen.

Durch den Zusatz weiterer handelsüblicher Additive, wie sie dem Fachmann zur Härtung von Epoxidharzen bekannt sind, kann das Härtungsprofil der erfindungsgemäßen Formulierungen variiert werden. So können z.B. die Auslösetemperaturen abhängig von der Zugabemenge weiter gesenkt oder aber die Gelzeiten und damit die Aushärtezeiten vorteilhaft den technischen Vorgaben und somit den speziellen Kundenbedürfnissen angepasst werden.

Additive zur Verbesserung der Verarbeitbarkeit der unausgehärteten Epoxidharzmassen oder zur Anpassung der thermisch-mechanischen Eigenschaften der duroplastischen Produkte an das Anforderungsprofil umfassen bspw. Reaktivverdünner, Füllstoffe, Rheologieadditive wie Thixotropierungsmittel oder Dispergieradditive, Antibackmitel, Farbstoffe, Pigmente, Zähmodifikatoren oder Brandschutzadditive.

Keine Einschränkungen gelten auch in Bezug auf die physikalische Form sowohl der Harze als auch der Härter, Co-Härter und der weiteren Additive. Insbesondere können pulverförmige Komponenten in mikronisierter oder aber nicht mikronisierter Form Verwendung finden. Auch der Zusatz von Lösemittel kann in manchen Anwendungen von Vorteil sein. Beispiele für Lösemittel sind Wasser, verschiedene Ester von Glykolethern, aber auch Ketone wie Aceton, MEK, MIBK oder Lösungsmittel wie DMF, etc.

Epoxidharz-Formulierungen mit den erfindungsgemäßen Beschleunigern eignen sich sowohl für manuelle als auch maschinelle Verarbeitungsverfahren und im Besonderen zur Herstellung von imprägnierten Verstärkungsfasern, wie sie u.a. in den Schriften von G. W. Ehrenstein, Faserverbund-Kunststoffe, 2006, 2. Auflage, Carl Hanser Verlag, München, Kapitel 5, Seite 148ff, und M. Reyne, Composite Solutions, 2006, JEC Publications, Kapitel 5, Seite 51ff, beschrieben sind. Neben dem Einsatz in Prepreg-Verfahren ist insbesondere die Handhabung in Infusionsverfahren eine bevorzugte Verarbeitungsform. Hierbei sind die im Allgemeinen sehr guten Löslichkeiten der Guanidin-Derivate gemäß Formel (I) sowohl in den Aminhärtern als auch in den Epoxidharzen von Vorteil, da für den Imprägnierprozess fließfähige Infusionsharze mit niedriger Viskosität benötigt werden (vgl. u.a. M. Reyne, Composite Solutions, 2006, JEC Publications, Kapitel 5, Seite 65; und G. W. Ehrenstein, Faserverbund-Kunststoffe, 2006, 2. Auflage, Carl Hanser Verlag, München, Kapitel 5, Seite 166).

Aufgrund der günstigen Anwendungseigenschaften der erfindungsgemäßen Härterformulierung sowie ihre kostengünstige Herstellung und einhergehend ein vorteilhaftes Kosten-Nutzen-Verhältnis sind diese besonders gut für eine technische Anwendung geeignet.

Die nachfolgenden Beispiele verdeutlichen die Vorteile der vorliegenden Erfindung.

### Beispiele

Nachfolgende Harz-Härter-Komponenten wurden in den Beispielen zur Veranschaulichung der Erfindung eingesetzt:

| Epoxidharz: | | | |
|---|---|---|---|
| Bezeichnung | Zeichen | EEW | CAS-Nr. |
| Bisphenol A-Flüssigharz¹⁾ | Epikote 828 | 182 - 187 | [25068-38-6] |
| | durchschnittliches Molekulargewicht <= 700 | | |

| Aminhärter: | | | |
|---|---|---|---|
| Bezeichnunq | Zeichen | HEW | CAS-Nr. |
| Isophorondiamin²⁾ | IPD | 43 | [2855-13-2] |
| Ethylendiamin²⁾ | EDA | 15 | [107-15-3] |
| Triethylentetramin²⁾ | TETA | 25 | [112-24-3] |
| Meta-Xylylendiamin²⁾ | MXDA | 34 | [1477-55-0] |
| Jeffamin JD-230³⁾ | JD-230 | 60 | [9046-10-0] |

| Guanidin-Härtungsbeschleuniger: | | | |
|---|---|---|---|
| Bezeichnunq | Zeichen | HEW | CAS-Nr. |
| 1,1-Dimethyl-3-cyanguanidin^{4,6,7,8)} | DMDCD | 16 | [1609-06-9] |
| 1-Acetyl-3-cyanguanidin^{4,9)} | AcDCD | 21 | [63071-29-4] |
| 1-(p-Chlorphenyl)-3-cyanguanidin^{4,6,7,8)} | CPDCD | 38 | [1482-62-8] |
| Nitroguanidin⁵⁾ | Nigu (NQ) | 27 | [556-88-7] |
| 1-Methyl-3-nitroguanidin^{4,5,10,11)} | MNQ | 34 | [4245-76-5] |
| 1-Ethyl-3-nitroguanidin^{4,12)} | ENQ | 38 | [39197-62-1] |
| 1-Butyl-3-nitroguanidin^{5,11)} | BuNQ | 40 | [5458-83-3] |
| Acetylguanidin^{5,13,14)} | AcGu | 17 | [5699-40-1] |
| Carbamoylguanidin^{4,15)} (Guanylharnstoff) | CarbamGu | 14 | [141-83-3] |
| Methoxycarbonylguanidin^{5,16)} | MetcarbGu | 24 | [30884-40-3] |

### Herkunft der Epoxidharze und Aminhärter sowie Herkunft und Herstellung der Guanidin-Härtungsbeschleuniger:

1) Hexion Speciality Chemicals
2) Sigma-Aldrich Group
3) Huntsman Corporation
4) Alzchem GmbH, Trostberg
5) Nigu Chemie, Waldkraiburg
6) US 2,455,807 (American Cyanamid Co), 1948
7) WO 92/01726.(Allied-Signal Inc), 1990
8) US 5,534,565 (Allied-Signal Inc), 1994
9) US 2,407,161 (American Cyanamid Co), 1946
10) DE 19939609 (Nigu Chemie), 2001
11) US 2,559,085 (A.F. McKay), 1951
12) A.F. McKay J. Am. Chem. Soc. 1949, 71, 1968-70
13) W. Traube Ber. Deutsch. Chem. Ges. 1911, 43, 3586-90
14) US 2,408,694 (Libby-Owens-Ford Glass Co.), 1946
15) US 2,277,823 (American Cyanamid Co.), 1942
16) E. Hoffmann, C. Laub Israel J. Chem. 1970, 8(4), 651-4

### Herstellung der Probe

Zur Bereitung der Harz-Härter-Formulierung wurden die Komponenten in den angegebenen Verhältnissen in eine Porzellanreibschale eingewogen und von Hand homogen durchmischt. Hierbei erfolgte die Zugabe der Inhaltsstoffe derart, dass das Epoxidharz vorgelegt wurde und zuerst der Aminhärter sowie im zweiten Schritt der Guanidin-Härtungsbeschleuniger zugegeben wurde. Nach der Zugabe erfolgte eine homogene Durchmischung.

### Ermittlung der Gelzeit

Etwa 700 - 800 mg der frisch zubereiteten Probe wurden in ein Aluminiumtiegelchen eingewogen, welches in einen auf die angegebene Temperatur vortemperierten Heizblock eingeführt wurde (Start der Zeitnahme). Die Prüfung auf Gelierung geschah mittels eines Holzspießchens, welches in das flüssige Harz eingetaucht wurde. Ergab sich beim Herausziehen ein stabiler Faden (kein Abtropfen mehr), so wurde diese Zeit als Gelzeit definiert.

### Durchführung des Topftests

100 g der frisch zubereiteten Probe wurde bei Raumtemperatur in ein 250 ml Schraubdeckelglas eingewogen (Start der Zeitnahme). Der Temperaturverlauf wurde mittels Thermofühler, der durch ein 4 mm großes Loch im Deckel mittig in die Probe eintauchte, registriert und digital aufzeichnet. Beim Erreichen der höchsten Temperatur wurde die verstrichene Zeit notiert.

### Durchführung der dynamischen DSC-Messungen

Zur Bestimmung der DSC-Peak-Temperatur (DSC Peak T) wurde die Probe mit einer Heizrate von 10 K/min von 30 auf 250°C aufgeheizt. Die DSC-Onset-Temperatur (DSC Onset T) wurde aus derselben Messung durch Anlegen der Tangente an den exothermen Reaktionspeak bestimmt. Für die Ermittlung der isothermen Reaktionszeit wurde eine zweite Probe in den auf die angegebene Temperatur aufgeheizten DSC-Ofen mittels Probengeber eingebracht und diese Temperatur für min. 40 min konstant gehalten. Die Lage des Härtungspeaks entsprach dem Zeitpunkt der maximal freiwerdenden Exothermie und wurde als isotherme Reaktionszeit definiert.

### Messung der Glasübergangstemperatur mittels DSC (End-Tg)

Für die Bestimmung der max. erreichbaren Glasübergangstemperatur (End-Tg) wurde die vorgelierte Probe aus der Gelzeitbestimmung herangezogen. Die Probe wurde durch Erhitzen auf 200°C (DSC-Temperaturprogramm: 30 bis 200°C, Heizrate 20 K/min) und 30 min Halten der Temperatur vollständig ausgehärtet. Nach dem Abkühlung auf 30°C wurde die Probe mit einer Aufheizrate von 10 K/min erneut von 30 auf 200°C aufgeheizt und aus der Heizkurve durch Anlegen der Tangente im Wendepunkt der größten Änderung der Wärmekapazität (ΔCp) der Tg bestimmt.

### Messung des dynamischen Tg mittels DSC (Dyn-Tg)

Im Gegensatz zum End-Tg wurde für die Ermittelung des dynamischen Tg die Probe vorher keinem Temperaturprogramm unterzogen. Zur Bestimmung des dynamischen Tg wurde die Probe mit einer Heizrate von 10 K/min von -40 auf 250°C einmalig aufgeheizt. Die Auswertung geschah durch Anlegen der Tangente im Wendepunkt der größten Änderung der Wärmekapazität (ΔCp).

### Definition und Ermittlung von EEW und HEW

Die Definition des Epoxid-Äquivalentgewichts (EEW) und des H-Äquivalentgewichts (HEW) findet man u.a. in Faserverbund-Kunststoffe, G. W. Ehrenstein, 2006, 2. Auflage, Carl Hanser Verlag, München, auf Seite 64. Die EEW und HEW wurden soweit vorhanden den technischen Datenblättern der Hersteller entnommen. War das HEW nicht verfügbar, so wurde es anhand der Tg-Max-Methode ermittelt. Hierzu wurden die End-Tg von Harz-Härterformulierungen mit unterschiedlichen Härtermengen bestimmt. Aus derjenige Zusammensetzung mit dem höchsten End-Tg wurde das HEW des Härters zurückgerechnet.

### Verwendete Analysengeräte

| Gelzeit | Heizblock | VLM 2.0 HT |
|---|---|---|
| DSC-Messungen | DSC-Gerät | Mettler-Toledo DSC 822 |
| Viskosität | Rheometer | Haake RheoStress 1 |

### Beispiel 1

Gelzeit vom Härter IPD mit erfindungsgemäßen Härtungsbeschleunigern Die erfindungsgemäßen Harzformulierungen wurden entsprechend der in Tabelle 1 angegebenen Zusammensetzungen wie eingangs beschrieben angefertigt und ausgetestet.

**Tabelle 1: Gelzeit bei 80°C**

| Versuch (efindungs-gemäß) | Epoxidharz [Teile] | Aminhärter [Teile] | Guanidin-Härtungsbeschleuniger [Teile] | Gelzeit bei 80°C [min:sek] |
|---|---|---|---|---|
| | | | | |
| 1.1 (nein, Vergleich) | Epikote 828 (100 Teile) | IPD (23,0 Teile) | - | 13 min 15 sek |
| | | | | |
| 1.2 (ja) | Epikote 828 (100 Teile) | IPD (23,0 Teile) | DMDCD (1,0 Teil) | 10 min 00 sek |
| 1.3 (ja) | Epikote 828 (100 Teile) | IPD (23,0 Teile) | AcDCD (1,0 Teil) | 8 min 00 sek |
| 1.4 (ja) | Epikote 828 (100 Teile) | IPD (23,0 Teile) | CPDCD (1,0 Teil) | 6 min 30 sek |
| | | | | |
| 1.5 (ja) | Epikote 828 (100 Teile) | IPD (23,0 Teile) | NQ (1,0 Teil) | 7 min 30 sek |
| 1.6 (ja) | Epikote 828 (100 Teile) | IPD (23,0 Teile) | MNQ (1,0 Teil) | 6 min 30 sek |
| 1.7 (ja) | Epikote 828 (100 Teile) | IPD (23,0 Teile) | ENQ (1,0 Teil) | 6 min 00 sek |
| 1.8 (ja) | Epikote 828 (100 Teile) | IPD (23,0 Teile) | BuNQ (1,0 Teil) | 9 min 00 sek |
| | | | | |
| 1.9 (ja) | Epikote 828 (100 Teile) | IPD (23,0 Teile) | AcGu (1,0 Teil) | 10 min 00 sek |
| 1.10 (ja) | Epikote 828 (100 Teile) | IPD (23,0 Teile) | CarbamGu (1,0 Teil) | 9 min 30 sek |
| 1.11 (ja) | Epikote 828 (100 Teile) | IPD (23,0 Teile) | MetcarbGu (1,0 Teil) | 9 min 00 sek |

Durch Zusatz der erfindungsgemäßen Härtungsbeschleuniger (1.2 - 1.11) zum Aminhärter IPD wurden die Gelzeiten bei 80°C gegenüber der Vergleichsprobe (1.1) reduziert.

### Beispiel 2

Topftest von Aminhärtern mit erfindungsgemäßen Härtungsbeschleunigern Die erfindungsgemäßen Harzformulierungen wurden entsprechend der in Tabelle 2 angegebenen Zusammensetzungen wie eingangs beschrieben angefertigt und ausgetestet.

**Tabelle 2: Topftest**

| Versuch (erfindungsgemäß) | Epoxidharz [Teile] | Aminhärter [Teile] | Guanidin-Härtungsbeschleuniger [Teile] | Topftest: Zeit t [min] bis zur max. Temp. Tmax [°C] |
|---|---|---|---|---|
| 2.1 (nein, Vergleich) | Epikote 828 (100 Teile) | IPD (23,0 Teile) | - | T = 127,8 °C |
| | | | | t = 175,0 min |
| 2.2 (ja) | Epikote 828 (100 Teile) | IPD (23,0 Teile) | AcDCD (1,0 Teil) | T = 187,1 °C |
| | | | | t = 50,0 min |
| 2.3 (ja) | Epikote 828 (100 Teile) | IPD (23,0 Teile) | CPDCD (1,0 Teil) | T = 182,4 °C |
| | | | | t = 45,0 min |
| 2.4 (ja) | Epikote 828 (100 Teile) | IPD (23,0 Teile) | MNQ (1,0 Teil) | T = 164,6 °C |
| | | | | t = 85,0 min |

Durch Zusatz der erfindungsgemäßen Härtungsbeschleuniger (2.2 - 2.4) zu den Aminhärtern wurden die maximalen Temperaturen gegenüber der Vergleichsprobe (2.1) in kürzerer Zeit erreicht.

### Beispiel 3

End-Tg von Aminhärtern mit erfindungsgemäßen Härtungsbeschleunigern Die erfindungsgemäßen Harzformulierungen wurden entsprechend der in Tabelle 3 angegebenen Zusammensetzungen wie eingangs beschrieben angefertigt und ausgetestet.

**Tabelle 3: End-Tg**

| Versuch (erfindungsgemäß) | Epoxidharz [Teile] | Aminhärter [Teile] | Guanidin-Härtungs-beschleuniger [Teile] | End-Tg [°C] |
|---|---|---|---|---|
| 3.1 (nein, Vergleich) | Epikote 828 (100 Teile) | IPD (23,0 Teile) | - | 163 |
| 3.2 (ja) | Epikote 828 (100 Teile) | IPD (23,0 Teile) | NQ (1,0 Teil) | 167 |
| 3.3 (ja) | Epikote 828 (100 Teile) | IPD (23,0 Teile) | MNQ (1,0 Teil) | 165 |

Durch Zusatz der erfindungsgemäßen Härtungsbeschleuniger (3.2, 3.3) zu den Aminhärtern wurden höhere End-Tg-Werte gegenüber der Vergleichsprobe (3.1) erreicht.

### Beispiel 4

### Tg-Verlauf vom Härter IPD mit erfindungsgemäßen Härtungseschleunigern bei 60°C

Die erfindungsgemäßen Harzformulierungen wurden entsprechend der in Tabelle 4 angegebenen Zusammensetzungen wie eingangs beschrieben angefertigt und ausgetestet.

**Tabelle 4: Dynamischer Tg-Verlauf 60°C-Härtung**

| Versuch (erfindungsgemäß) | Epoxidharz [Teile] | Aminhärter [Teile] | Guanidin-Härtungsbeschleuniger [Teile] | Tg-Verlauf bei 60°C-Härtung [h] / [°C] |
|---|---|---|---|---|
| 4.1 (nein, Vergleich) | Epikote 828 (100 Teile) | IPD (23,0 Teile) | - | 0 h / -29 °C |
| | | | | 1 h / 23 °C |
| | | | | 2 h / 69 °C |
| | | | | 48 h / 96 °C |
| 4.2 (ja) | Epikote 828 (100 Teile) | IPD (23,0 Teile) | AcDCD (1,0 Teil) | 0 h / -32 °C |
| | | | | 1 h / 52 °C |
| | | | | 2 h / 72 °C |
| | | | | 48 h / 94 °C |
| 4.3 (ja) | Epikote 828 (100 Teile) | IPD (23,0 Teile) | CPDCD (1,0 Teil) | 0 h / -29 °C |
| | | | | 1 h / 65 °C |
| | | | | 2 h / 74 °C |
| | | | | 48 h / 93 °C |
| 4.4 Ga) | Epikote 828 (100 Teile) | IPD (23,0 Teile) | MNQ (1,0 Teil) | 0 h / -28 °C |
| | | | | 1 h / 60 °C |
| | | | | 2 h / 75 °C |
| | | | | 48 h / 95 °C |

Durch Zusatz der erfindungsgemäßen Härtungsbeschleuniger (4.2 - 4.4) zum Aminhärter IPD wurde der Härtungsverlauf bei 60°C gegenüber einer Vergleichsprobe (4.1) beschleunigt. Insbesondere wurde ein schneller Anstieg der dyn. Tg-Werte innerhalb der ersten beiden Stunden erzielt. Der maximal erreichbare Tg war hingegen im Rahmen der Schwankungsbreite identisch.

## Patentansprüche

1. Verwendung von Guanidin-Derivaten der allgemeinen Formel (I) 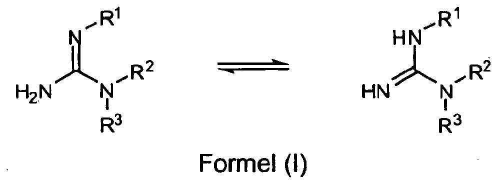 wobei gilt:
R¹ = -CN, -NO₂, -(C=O)-R⁴,
R² = -H, -Alkyl, -Benzyl, -Phenyl, -Aryl, -(C=O)-R⁴,
R³ = -H, -Alkyl,
R⁴ = -H, -Alkyl, -NH₂, -NH-Alkyl, -O-Alkyl,
und wobei für R¹ = -CN nicht gleichzeitig R² = R³= -H gilt,
als Härtungsbeschleuniger in kalthärtenden Epoxidharz-Zusammensetzungen,
wobei das Guanidin-Derivat zusammen mit mindestens einem Aminhärter für Epoxidharze, der bei einer Temperatur von < 60 °C aktivierbar ist, verwendet wird.

2. Verwendung von Guanidin-Derivaten nach Anspruch 1, **dadurch gekennzeichnet, dass** 1,1-Dimethyl-3-cyanguanidin, 1-Acetyl-3-cyanguanidin, 1-(p-Chlorphenyl)-3-cyanguanidin, Nitroguanidin, 1-Methyl-3-nitroguanidin, 1-Ethyl-3-nitroguanidin, 1-Butyl-3-nitroguanidin, 1-Benzyl-3-nitroguanidin, Formylguanidin, Acetylguanidin, Carbamoylguanidin oder Methoxycarbonylguanidin als Härtungsbeschleuniger für kalthärtende Epoxidharz-Zusammensetzungen verwendet wird.

3. Verwendung von Guanidin-Derivaten nach mindestens einem der vorgenannten Ansprüche 1 bis 2, **dadurch gekennzeichnet, dass** der Aminhärter gewählt wird aus der Gruppe Alkyldiamine, Aryldiamine, Alkylpolyamine, Arylpolyamine, Polyetheramine, wobei jeder Aminhärter mindestens zwei freie Amingruppen aufweist.

4. Verwendung von Guanidin-Derivaten nach mindestens einem der vorgenannten Ansprüche 1 bis 3, **dadurch gekennzeichnet, dass** der Aminhärter gewählt wird aus der Gruppe Ethylendiamin, Diethylentriamin, Triethylentetramin, meta-Xylylendiamin, Methylendianilin, para-Aminocyclohexylmethan, Isophorondiamin und Polyetheramine.

5. Verwendung von Guanidin-Derivaten gemäß mindestens einem der vorgenannten Ansprüche 1 bis 4, **dadurch gekennzeichnet, dass** das Guanidin-Derivat in einer Menge von 0,1 bis 15 Gew.-% bezogen auf die Epoxidharz-Zusammensetzung eingesetzt wird.

6. Verwendung von Guanidin-Derivaten gemäß mindestens einem der vorgenannten Ansprüche 1 bis 5, **dadurch gekennzeichnet, dass** das Guanidin-Derivat in einem Verhältnis von 0,1 bis 15 Teile bezogen auf 100 Teile Epoxidharz eingesetzt wird.

7. Kalthärtende Epoxidharz-Zusammensetzung, umfassend ein oder mehrere Guanidin-Derivate der allgemeinen Formel (I) 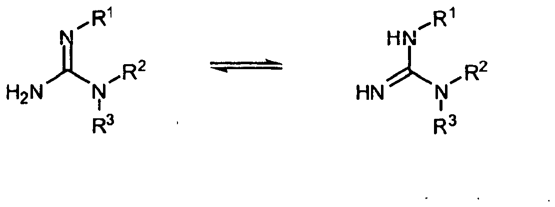 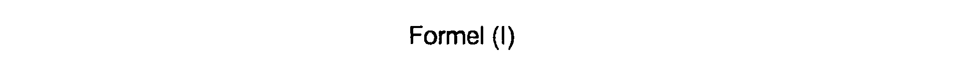 wobei gilt:
R¹ = -CN, -NO₂, -(C=O)-R⁴,
R² = -H, -Alkyl, -Benzyl, -Phenyl, -Aryl, -(C=O)-R⁴,
R³ = -H, -Alkyl,
R⁴ = -H, -Alkyl, -NH₂, -NH-Alkyl, -O-Alkyl,
und wobei für R¹ = -CN nicht gleichzeitig R² = R³= -H gilt,
als Härtungsbeschleuniger,
wobei das Guanidin-Derivat zusammen mit mindestens einem Aminhärter für Epoxidharze, der bei einer Temperatur von < 60 °C aktivierbar ist, verwendet wird.

8. Kalthärtende Epoxidharz-Zusammensetzung nach Anspruch 7, **dadurch gekennzeichnet, dass** als Härtungsbeschleuniger 1,1-Dimethyl-3-cyanguanidin, 1-Acetyl-3-cyanguanidin, 1-(p-Chlorphenyl)-3-cyanguanidin, Nitroguanidin, 1-Methyl-3-nitroguanidin, 1-Ethyl-3-nitroguanidin, 1-Butyl-3-nitroguanidin, 1-Benzyl-3-nitroguanidin, Formylguanidin, Acetylguanidin, Carbamoylguanidin oder Methoxycarbonylguanidin eingesetzt wird.

9. Kalthärtende Epoxidharz-Zusammensetzung nach Anspruch 7 oder 8, **dadurch gekennzeichnet, dass** die Zusammensetzung als Aminhärter ein Alkyldiamin, Aryldiamin, Alkylpolyamin, Arylpolyamin, Polyetheramin, wobei diese Aminhärter jeweils mindestens zwei freie Amingruppen aufweisen, umfasst.

10. Kalthärtende Epoxidharz-Zusammensetzung nach einem der Ansprüche 7 bis 9, **dadurch gekennzeichnet, dass** die Zusammensetzung ein oder mehrere Aminhärter umfasst, die ausgewählt sind aus der Gruppe Ethylendiamin, Diethylentriamin, Triethylentetramin, meta-Xylylendiamin, Methylendianilin, para-Aminocyclohexylmethan, Isophorondiamin und Polyetheramine.

11. Kalthärtende Epoxidharz-Zusammensetzung nach einem der Ansprüche 7 bis 10, **dadurch gekennzeichnet, dass** die Zusammensetzung weiterhin ein oder mehrere Hilfs- und/oder Zusatzstoffe enthält, die vorzugsweise ausgewählt sind aus der Gruppe Reaktivverdünner, Füllstoffe, Rheologieadditive, Thixotropierungsmittel, Dispergieradditive, Antibackmitel, Farbstoffe, Pigmente, Zähmodifikatoren und/oder Brandschutzadditive.

12. Verfahren zur Herstellung einer kalthärtenden Epoxidharz-Zusammensetzung nach einem der Ansprüche 7 bis 11 mittels homogener Durchmischung umfassend die Verfahrensschritte
a. Bereitstellen von mindestens einem Epoxidharz mit durchschnittlich mehr als einer Epoxidgruppe pro Molekül,
b. Hinzufügen von mindestens einem Aminhärter für Epoxidharze, der bei einer Temperatur von < 60 °C aktivierbar ist,
c. Hinzufügen von mindestens einem Guanidin-Derivat gemäß Anspruch 1 als Härtungsbeschleuniger
mit der Maßgabe, dass die Verfahrensschritte b) und c) nacheinander oder gleichzeitig erfolgen.

13. Verfahren nach Anspruch 12, **dadurch gekennzeichnet, dass** zuerst die Zugabe des Aminhärters und hiernach die Zugabe des Härtungsbeschleunigers erfolgen.

14. Verfahren nach mindestens einem der vorgenannten Ansprüche 12 oder 13, **dadurch gekennzeichnet, dass** vor den Verfahrensschritten b) oder c) die Zugabe von mindestens einem Hilfs- und/ oder Zusatzstoff erfolgt, wobei der Hilfs- und/ oder Zusatzstoff vorzugsweise ausgewählt ist aus der Gruppe Reaktiwerdünner, Füllstoffe, Rheologieadditive, Thixotropierungsmittel, Dispergieradditive, Antibackmitel, Farbstoffe, Pigmente, Zähmodifikatoren und/oder Brandschutzadditive.

15. Verfahren nach mindestens einem der vorgenannten Ansprüche 12 bis 14, **dadurch gekennzeichnet, dass** das Verfahren ohne zusätzlichen Wärmeeintrag erfolgt.

## Claims

1. Use of guanidine derivatives of the general formula (I) 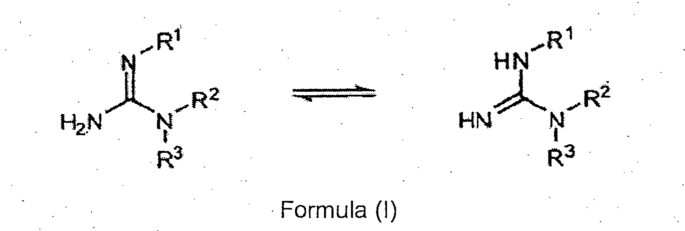 wherein:
R¹ = -CN, -NO₂, -(C=O)-R⁴,
R² = -H, -alkyl, -benzyl, -phenyl, -aryl, -(C=O)-R⁴,
R³ = -H, -alkyl,
R⁴ = -H, -alkyl, -NH₂, -NH-alkyl, -O-alkyl,
and wherein, where R¹ = -CN, R² does not simultaneously = R³ = -H,
as curing accelerators in cold-curing epoxy resin compositions, wherein the guanidine derivative is used together with at least one amine curing agent for epoxy resins which is activatable at a temperature of < 60 °C.

2. Use of guanidine derivatives according to claim 1, **characterised in that** 1,1-dimethyl-3-cyanoguanidine, 1-acetyl-3-cyanoguanidine, 1-(p-chlorophenyl)-3-cyanoguanidine, nitroguanidine, 1-methyl-3-nitroguanidine, 1-ethyl-3-nitroguanidine, 1-butyl-3-nitroguanidine, 1-benzyl-3-nitroguanidine, formylguanidine, acetylguanidine, carbamoylguanidine or methoxycarbonylguanidine is used as a curing accelerator for cold-curing epoxy resin compositions.

3. Use of guanidine derivatives according to at least one of the preceding claims 1 and 2, **characterised in that** the amine curing agent is selected from the group comprising alkyldiamines, aryldiamines, alkylpolyamines, arylpolyamines and polyetheramines, each amine curing agent comprising at least two free amine groups.

4. Use of guanidine derivatives according to at least one of the preceding claims 1 to 3, **characterised in that** the amine curing agent is selected from the group comprising ethylenediamine, diethylenetriamine, triethylenetetramine, meta-xylylenediamine, methylenedianiline, para-aminocyclohexylmethane, isophoronediamine and polyetheramines.

5. Use of guanidine derivatives according to at least one of the preceding claims 1 to 4, **characterised in that** the guanidine derivative is used in an amount of from 0.1 to 15 wt.% based on the epoxy resin composition.

6. Use of guanidine derivatives according to at least one of the preceding claims 1 to 5, **characterised in that** the guanidine derivative is used in a ratio of from 0.1 to 15 parts per 100 parts of epoxy resin.

7. Cold-curing epoxy resin composition comprising one or more guanidine derivatives of the general formula (I) 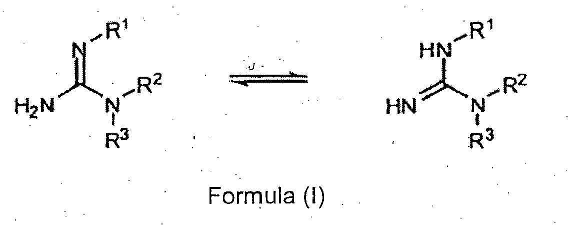 wherein:
R¹ = -CN, -NO₂, -(C=O)-R⁴,
R² = -H, -alkyl, -benzyl, -phenyl, -aryl, -(C=O)-R⁴,
R³ = -H, -alkyl,
R⁴ = -H, -alkyl, -NH₂, -NH-alkyl, -O-alkyl,
and wherein, where R¹ = -CN, R² does not simultaneously = R³ = -H,
as a curing accelerator, wherein the guanidine derivative is used together with at least one amine curing agent for epoxy resins which is activatable at a temperature of < 60 °C.

8. Cold-curing epoxy resin composition according to claim 7, **characterised in that** 1,1-dimethyl-3-cyanoguanidine, 1-acetyl-3-cyanoguanidine, 1-(p-chlorophenyl)-3-cyanoguanidine, nitroguanidine, 1-methyl-3-nitroguanidine, 1-ethyl-3-nitroguanidine, 1-butyl-3-nitroguanidine, 1-benzyl-3-nitroguanidine, formylguanidine, acetylguanidine, carbamoylguanidine or methoxycarbonylguanidine is used as the curing accelerator.

9. Cold-curing epoxy resin composition according to either claim 7 or claim 8, **characterised in that** the composition comprises an alkyldiamine, aryldiamine, alkylpolyamine, arylpolyamine or polyetheramine as the amine curing agent, these amine curing agents each comprising at least two free amine groups.

10. Cold-curing epoxy resin composition according to any of claims 7 to 9, **characterised in that** the composition comprises one or more amine curing agents which are selected from the group comprising ethylenediamine, diethylenetriamine, triethylenetetramine, meta-xylylenediamine, methylenedianiline, para-aminocyclohexylmethane, isophoronediamine and polyetheramines.

11. Cold-curing epoxy resin composition according to any of claims 7 to 10, **characterised in that** the composition furthermore contains one or more auxiliary agents and/or additives which are preferably selected from the group comprising reactive diluents, fillers, rheological additives, thixotropic agents, dispersing additives, anticaking agents, dyes, pigments, toughness modifiers and/or flame retardants.

12. Method for producing a cold-curing epoxy resin composition according to any of claims 7 to 11 by means of homogeneous intermixing, comprising the method steps of:
a. providing at least one epoxy resin with on average more than one epoxy group per molecule,
b. adding at least one amine curing agent for epoxy resins which is activatable at a temperature of < 60 °C,
c. adding at least one guanidine derivative according to claim 1 as a curing accelerator
with the proviso that method steps b) and c) take place in succession or simultaneously.

13. Method according to claim 12, **characterised in that** the amine curing agent is added first, and the curing accelerator is added thereafter.

14. Method according to at least one of the preceding claims 12 or 13, **characterised in that**, before method steps b) or c), at least one auxiliary agent and/or additive is added, the auxiliary agent and/or additive preferably being selected from the group comprising reactive diluents, fillers, rheological additives, thixotropic agents, dispersing additives, anticaking agents, dyes, pigments, toughness modifiers and/or flame retardants.

15. Method according to at least one of the preceding claims 12 to 14, **characterised in that** the method takes place without additional input of heat.

## Revendications

1. Utilisation de dérivés de la guanidine de la formule générale (I) : 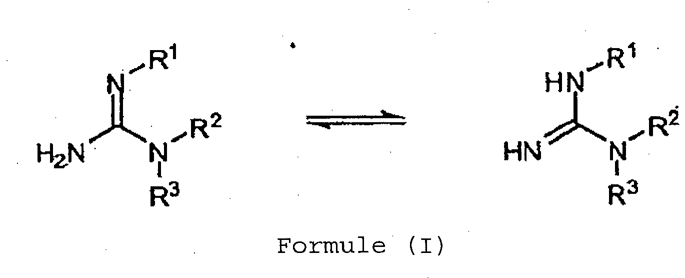 où
R¹ = -CN, -NO₂, -(C=O)R⁴ ;
R² = -H, alkyle, benzyle, phényle, aryle, -(C=O)R⁴ ;
R³ = -H, alkyle ;
R⁴ = -H, alkyle, -NH₂, -NH-alkyle, -O-alkyle,
et où pour R¹ = -CN, R² = R³ = -H, ne vaut pas simultanément,
comme accélérateur de durcissement dans des compositions de résine époxyde durcissant à froid,
où le dérivé de la guanidine est utilisé avec au moins un durcisseur amine pour résine époxyde, qui peut être activé à une température < 60°C.

2. Utilisation de dérivés de la guanidine selon la revendication 1, **caractérisée en ce que** l'on utilise la 1,1-diméthyl-3-cyanoguanidine, la 1-acétyl-3-cyano-guanidine, la 1-(p-chlorophényl)-3-cyanoguanidine, la nitroguanidine, la 1-méthyl-3-nitroguanidine, la 1-éthyl-3-nitroguanidine, la 1-butyl-3-nitroguanidine, la 1-benzyl-3-nitroguanidine, la formylguanidine, l'acétylguanidine, la carbamoylguanidine ou la méthoxycarbonylguanidine comme accélérateur de durcissement de compositions de résine époxyde durcissant à froid.

3. Utilisation de dérivés de la guanidine selon au moins l'une des revendications précédentes 1 à 2, **caractérisée en ce que** l'on choisit le durcisseur amine parmi le groupe des alkyldiamines, aryldiamines, alkylpolyamines, arylpolyamines, polyétheramines, où le durcisseur amine présente chaque fois au moins deux radicaux amino libres.

4. Utilisation de dérivés de la guanidine selon au moins l'une des revendications précédentes 1 à 3, **caractérisée en ce que** le durcisseur amine est choisi parmi le groupe de l'éthylènediamine, la diéthylènetriamine, la triéthylènetétramine, la méta-xylylènediamine, la méthylènedianiline, le para-aminocyclohexylméthane, l'isophoronediamine et les polyétheramines.

5. Utilisation de dérivés de la guanidine selon au moins l'une des revendications précédentes 1 à 4, **caractérisée en ce que** l'on met en oeuvre le dérivé de la guanidine en une quantité située dans l'intervalle allant de 0,1 à 15% en poids, sur base de la composition de résine époxyde.

6. Utilisation de dérivés de la guanidine selon au moins l'une des revendications précédentes 1 à 5, **caractérisée en ce que** l'on met en oeuvre le dérivé de la guanidine en un rapport allant de 0,1 à 15 parties sur base de 100 parties de résine époxyde.

7. Composition de résine époxyde durcissant à froid, comprenant un ou plusieurs dérivés de la guanidine de la formule générale (I) : 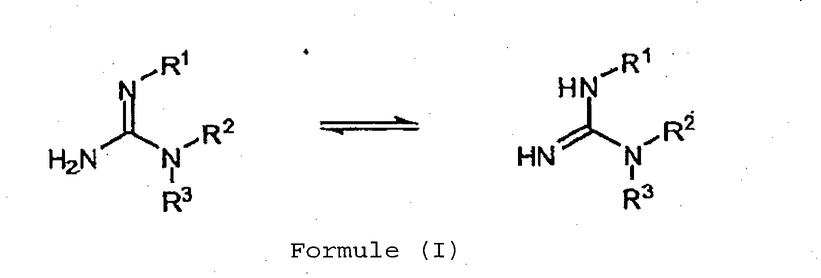 où
R¹ = -CN, -NO₂, (C=O)R⁴ ;
R² = -H, alkyle, benzyle, phényle, aryle, -(C=O)R⁴ ;
R³ = -H, alkyle ;
R⁴ = -H, alkyle, -NH₂, -NH-alkyle, -O-alkyle,
et où pour R¹ = -CN, R² = R³ = -H, ne vaut pas simultanément,
comme accélérateur de durcissement,
où le dérivé de la guanidine est utilisé avec au moins un durcisseur amine pour résine époxyde, qui est activable à une température < 60°C.

8. Composition de résine époxyde durcissant à froid selon la revendication 7, **caractérisée en ce que** l'on met en oeuvre comme accélérateur de durcissement, la 1,1-diméthyl-3-cyanoguanidine, la 1-acétyl-3-cyano-guanidine, la 1-(p-chlorophényl)-3-cyanoguanidine,la nitroguanidine, la 1-méthyl-3-nitroguanidine, la 1-éthyl-3-nitroguanidine, la 1-butyl-3-nitroguanidine, la 1-benzyl-3-nitroguanidine, la formylguanidine, l'acétylguanidine, la carbamoylguanidine ou la méthoxycarbonylguanidine.

9. Composition de résine époxyde durcissant à froid selon la revendication 7 ou 8, **caractérisée en ce que** la composition contient comme durcisseur amine une alkyldiamine, une aryldiamine, une alkylpolyamine, une arylpolyamine, une polyétheramine, où le durcisseur amine présente chaque fois au moins deux radicaux amino libres.

10. Composition de résine époxyde durcissant à froid selon l'une des revendications 7 à 9, **caractérisée en ce que** la composition comprend un ou plusieurs durcisseurs amine, qui sont choisis parmi le groupe de l'éthylènediamine, la diéthylènetriamine, la triéthylènetétramine, la méta-xylylènediamine, la méthylènedianiline, le para-aminocyclohexylméthane, l'isophoronediamine et les polyétheramines.

11. Composition de résine époxyde durcissant à froid selon l'une des revendications 7 à 10, **caractérisée en ce que** la composition contient d'autre part, un ou plusieurs auxiliaires et/ou additifs, qui sont de préférence choisis parmi le groupe des diluants réactifs, des charges, des additifs de rhéologie, des agents thixotropes, des additifs de dispersion, des antiagglomérants, des colorants, des pigments, des agents modifiant la viscosité et/ou des additifs de protection au feu.

12. Procédé de préparation d'une composition de résine époxyde durcissant à froid selon l'une des revendications 7 à 11, par mélange homogène, comprenant les étapes de
a. Préparation d'au moins une résine époxyde avec en moyenne, plus d'un radical époxyde par molécule,
b. Introduction d'au moins un durcisseur amine pour résine époxyde, qui peut être activé à une température < 60°C,
c. Introduction d'au moins un dérivé de la guanidine selon la revendication 1, comme accélérateur de durcissement,
étant entendu que les étapes b) et c) sont effectuées successivement ou simultanément.

13. Procédé selon la revendication 12, **caractérisé en ce que** l'on effectue d'abord l'addition du durcisseur amine, puis l'addition de l'accélérateur de durcissement.

14. Procédé selon au moins l'une des revendications précédentes 12 ou 13, **caractérisé en ce que** l'on effectue avant les étapes de procédé b) ou c), l'addition d'au moins un auxiliaire et/ou additif, où l'auxiliaire et/ou additif est de préférence choisi parmi le groupe des diluants réactifs, des charges, des additifs de rhéologie, des agents thixotropes, des additifs de dispersion, des antiagglomérants, des colorants, des pigments, des agents modifiant la viscosité et/ou des additifs de protection au feu.

15. Procédé selon au moins l'une des revendications précédentes 12 à 14, **caractérisé en ce que** l'on effectue le procédé sans apport de chaleur.
